# EUROPEAN PATENT SPECIFICATION

(11) **EP 2 734 050 B1**
(45) Date of publication and mention of the grant of the patent: **06.03.2019**
(21) Application number: 12750612.9
(22) Date of filing: 20.07.2012
(51) Int. Cl.: A23C 9/12, A23C 9/13, A23C 9/137, A23C 9/154, A23C 9/123

(54) **MILK-BASED COMPOSITIONS AND PROCESS OF MAKING THE SAME**
ZUSAMMENSETZUNGEN AUF MILCHBASIS UND HERSTELLUNGSVERFAHREN DAFÜR
COMPOSITIONS À BASE DE LAIT ET LEUR PROCÉDÉ DE FABRICATION

(30) Priority: 22.07.2011 IN 2087DE2011
(43) Date of publication of application: 28.05.2014
(73) Proprietor: Compagnie Gervais Danone, 75009 Paris (FR); Danone Foods & Beverages (India) Pvt. Ltd., Gurgaon (IN); Danone GmbH, 85540 Haar (DE)
(72) Inventor: HORA, Rajneesh, Guragaon (IN); PAGES, Philippe, F-75014 Paris (FR); SACHER, Kai, 83022 Rosenheim (DE)
(74) Representative: Lavoix
(86) International application number: PCT/IB2012/001424
(87) International publication number: WO 2013/014518

(56) References cited:
- EP-A1- 0 667 106
- CA-A1- 976 027
- FR-A1- 2 905 560
- KR-U- 20070 000 960
- US-A- 2 653 876
- US-A- 5 562 937

## Description

### FIELD OF INVENTION

The present invention is defined by the claims and relates to the field of fermented milk based compositions and to their processes of preparation. The present invention in particular relates to milk based compositions such as dairy fermented products such as yogurts, beverages, and desserts.

### BACKGROUND TO THE INVENTION

Milk is an ideal food and is well known as a healthful source of protein and calcium. It is rich in carbohydrate primarily lactose, protein mainly casein and fat. Further, minerals like calcium, sodium, potassium, magnesium, and phosphorous are present in considerable quantities. Milk also provides considerable quantity of thiamine, riboflavin, niacin, pyridoxine, pantothenic acid, biotin, folic acid, and vitamin B12.

Milk-based food compositions such as yogurts, milk beverages, and desserts are known. They are appreciated for nutritional purposes because they comprise nutrients of milk, and also for some organoleptic qualities, including viscosity and texture. Therefore, consumers prefer to include milk products as a part of their healthy and balanced diet. However, many of these products contain added stabilizers and emulsifiers which are modified and are expensive. Moreover, these products have a chalky feel in the consumer's mouth and do not provide a significant amount of milk.

Stability is the major concern of milk based product. There are several stability problems to overcome, such as microbial stability or stability with respect to the coagulation of milk, other proteins, or any other ingredients present in the milk based product. In addition, taste is a big concern, since the consumers prefer the products having desirable taste and mouth-feel.

Stability of compositions is at least partially linked to the viscosity, for example some additives such as vitamins or minerals can phase separate upon storage if the viscosity is not high enough. Viscosity is at least partially linked to the protein content of the product. The lower the protein content is, the lower the viscosity. In order to increase the stability and the viscosity of milk-based compositions, use of stabilizers such as modified starch is known in the art.

However, current stabilizers such as modified starch are expensive and are perceived by consumer as non natural compounds. For example, some population cannot afford products with high protein contents and/or with expensive stabilizers. Moreover, some stabilizers such as modified starch have poor nutritional value. Therefore, there is a need for alternative means to increase viscosity and/or stability of products while retaining the good and nutritional quality of the product such as the nutrition rich and well balanced product.

Rice flour or wheat flour are known in the art. However, these ingredients provide either an unpleasant sticky texture or a non creamy feeling or a bad taste that is not expected for milk based products.

EP 0 667 106 relates to a new process for reducing either simultaneously or separately the content of fermented milk products and/or fruit material in foodstuffs containing fermented milk products and/or fruit material. EP 0 667 106 relates in particular to a process for reducing either simultaneously or separately the content of fermented milk products and/or fruit material in foodstuffs containing fermented milk products and/or fruit material, which comprises adding thereto an acidic amylaceous fermented composition resulting from a process wherein:
a) a slurry of cereal flour and at least one additional non-cereal starch material is first subjected to gelatinization and further homogenized;
b) inoculated with an acidifying strain or a mixture of acidifying strains selected from Lactobacillus species, Streptococcus thermophilus and Bifidobacterium species;
c) then subjected to a fermentation over a period and at a temperature such as to afford a pH of about 3.5 to 4.2 of the fermented material; and
d) finally stabilized.

US2653876 focuses especially on the preparation of sauces and gravies. It relates in particular to pre-cooked, frozen creamed chicken. This involves a reconstitution of the product to re-form its creamy texture.

Although there has been significant improvement in providing such milk based products, most have been unsuccessful in achieving inclusion of a large proportion of milk in a stable milk based product.

Although there has been significant improvement in providing such milk based products, most have been unsuccessful in achieving stability with natural compounds and/or with cost effective compounds, especially at a quite low protein content.

Hence, it is desirable, to provide a stable and healthy milk based product which contains milk, especially large amount of milk. It is further desirable to have such a milk based product that consists of all natural ingredients. It is also desirable to have a milk based product having desired taste and mouth-feel.

Surprisingly, the above limitations and difficulties have been overcome by the present invention that satisfies the above objectives and long felt need to develop milk based composition comprising the natural stabilizer and substantially free of gelling agent(s) and/or modified starch.

### SUMMARY OF THE INVENTION

One aspect of the present invention relates to a milk based composition comprising 15% to 95%, preferably 25% to 95 %, milk and/or milk components, 0.5% to 5.5% (w), preferably 0.5% to 4 % (w), wheat flour, and 0.5 % to 4 % (w) rice flour; and wherein the composition is a fermented product comprising at least one lactic acid bacterial strain and wherein the composition optionally comprises sugar, salt, vitamins, minerals supplements, organoleptic modifiers, or a combination thereof.

Another aspect of the present invention relates to process of making a milk based composition, wherein said process comprises (a) blending 15% to 95%, preferably 25% to 95 %, milk and/or milk components with 0.5 to 5.5% (w), preferably 0.5 to 4 % (w), wheat flour, and 0.5 to 3% (w) rice flour to obtain a mixture; and (b) heating the mixture at a temperature of about at least 90°C, preferably at least 95°C, more preferably at least 120 °C; and c) subjecting the mixture of step (b) to cooling at a temperature in the range of 25°C to 45°C, and inoculating at least one lactic acid bacterial strain after cooling and allowing fermentation at a temperature of about 35°C to 45°C preferably at 38°C.

### OBJECTS OF THE INVENTION

Primary object of the present invention is to address at least one of the needs and/or problems associated with the prior art by providing a well balanced nutrition, preferably nutrition rich, milk based compositions.

Another object of the present invention is to provide use of wheat and rice flour in compositions especially in milk based composition as stabilizer.

Another object of the present invention is to provide fermented milk based compositions having acceptable organoleptic properties, wherein the composition comprises milk, wheat and rice flour, wherein the composition is substantially free of gelling agent, agglutinating agent, and/or modified starch.

Yet another object of the present invention is to provide a process of making such milk based compositions.

### DETAILED DESCRIPTION OF THE INVENTION

### Definitions

The terms "milk based product(s)", "milk product", "milk based composition" and "milk based food composition(s)" used herein can be used interchangeably. These encompass compositions comprising milk or milk components, wherein the milk chemical composition is not modified, or wherein the milk chemical composition is modified for example by fermentation. Herein a "milk based" composition encompassed a "milk containing" composition. The milk and/or milk components are preferably cow milk and/or milk components.

As used herein, percentages refer to the percent of a component, on a percentage by weight basis, in the total composition, unless otherwise stated.

The present invention provides fermented milk based food compositions especially fermented milk products such as yogurt, desserts, and beverages. The compositions is a fermented milk based product, said fermented milk based product being optionally a fermented and thermized milk based product. In one embodiement the composition is a fermented milk based product different from a fermented and thermized milk based product, for example non thermized milk based product such as a yogurt. The disclosed milk compositions particularly comprise wheat and rice flour and are substantially free of gelling agent(s) and/or modified starch, wherein the wheat and rice flour do not adversely affect other flavors and texture attributes of the product. Further, it is believed that the combination of both wheat flour and rice flour provide an improved balance for viscosity, non-stickiness and/or creaminess.

The milk based compositions disclosed in the present invention exhibits a desirable attributes such as texture, flavor, viscosity, density and organoleptic characteristics. Surprisingly, it was found that these attributes are stable during a shelf life typically after production of up to 6 months at ambient temperature, for example an expected shelf life of 15-90 days under refrigerated conditions for fermented products, preferably 15-30 days under refrigerated conditions for the fermented product different from the fermented and thermized product, or 30-90 days under refrigerated conditions for the fermented and thermized product. During the expected refrigerated shelf life, the milk compositions of the present invention preferably maintain its viscosity, texture, and density.

Surprisingly, it has been found that the use of wheat and rice flour according to the invention allows a stable good quality milk product having acceptable on organoleptic quality.

There is provided, according to the present invention, fermented milk based compositions such as yogurt, beverage and/or desserts preferably milk based food compositions which comprise milk and stabilizers specifically wheat and rice flour. The milk based food compositions optionally comprise vitamins, minerals, protein, fat including vegetable fats, flavor, color, whey protein, non-fat dried milk, chocolate, cocoa, at least one Lactobacillus strain, fruit ingredients, natural fruit flavors, an acidulant, or a combination thereof.

The composition of the present invention comprises milk and/or milk components. Thus according to one embodiment one uses milk, and optionally further milk components, and according to another embodiment one can use milk components. Indeed one can reconstitute milk or part of milk by mixing milk components. For example one can reconstitute milk by mixing dry milk powder and water. Herein milk components refer to water associated to a non water component that is present in milk. Milk components are commercially available. Examples of milk components beyond water include dry milk, dried skimmed milk, non fat milk powder, cream, milk proteins isolates, milk protein powders, whey, whey permeate, milk permeate, lactose, buttermilk etc. Some milk components are sometimes referred to as "technical" milk powders.

The milk based product of the present invention includes from about 15%, preferably 25%, milk to about 95% milk and/or milk components. The milk and/or milk components amount can be for example of 15%-25% or of 25%-95%. Herein the amount of milk is understood as the amount of milk and/or milk components with additional water. A preferred range of milk content is from about 60% to about 90%. In a most preferred embodiment, the milk product of the present invention includes from about 80% to about 88% milk, preferably about 86% milk. In alternate embodiments, milk or part of milk can be added in any milk component form, including a non-fat dried milk, but fully constituted non-fat, or skim milk. In further alternate products, which do not form part of the invention, soy milk or dried soy milk isolates, or other edible protein rich fluids, concentrates or dry isolates may be used. It is mentioned that the composition of the invention can comprise from 0 to 70% of additional water, added beyond milk.

The milk based food product of the present invention includes from about 0.5% to about 5.5%, preferably 4%, wheat flour, preferably 1 to 4%, and 0.5% to about 4% rice flour, preferably 1 to 3%. The wheat flour amount can be for example of 0.5-4% or 4-5.5%. A preferred range of wheat flour content is from about 1% to about 3.5% and. A preferred range of rice flour is from about 1.7% to about 2.5%. Wheat flour and rice flour are known by the one skilled in the art and are commercially available as such.

The fruit ingredients of the milk product of the present invention may include fresh fruits, fruit puree, frozen purees, fruit puree concentrates, fruit juices, fruit juice concentrate, or any other fruit products known in the art. Combinations of such fruit ingredients may also be employed. Other ingredients including but not limited to may be added to the composition of the present invention.

Further, the fermented milk based food compositions as disclosed in the present invention may further comprise natural or artificial sweeteners, sugars, or sugar syrups. Other additional ingredients may include vegetable purees or vegetable juices, medicinal compositions, soy and soy-related products.

Further, the fermented milk based food compositions as disclosed in the present invention comprise 0.1% to 6% fat content and 2.5 to 3.5% protein.

The milk based fermented food compositions of the present invention are stable even at a low pH, from about 3.8 to about 4.7, preferably from about 4.1 to about 4.6, more preferably from about 4.4 to about 4.6, most preferably at pH 4.6.

The fermented milk based compositions as disclosed in the present invention have viscosity higher than 800 mPa.s measured at a temperature of 10°C, at a shear of 64 s⁻¹ or 1290 s⁻¹, and preferably of higher than 1000 mPa.s.

The milk used in the compositions of the present invention can be a full or whole milk, skim milk, liquid skim milk, skim milk powder, dried or powdered milk, and condensed milk.

The compositions of the present invention, made in accordance with the process of the present invention, result in a milk product having creamy, desirable taste and desirable mouth-feel.

Addition of 0.5% to 5.5%, preferably 0.5% to 4%, wheat and 0.5% to 4% rice flour in the ratio of 1:3 to 3:1 in milk based product disclosed in the present invention stabilizes the product and does not require addition of gelling agent, agglutinating agent, and/or modified starch. The products are stable under the refrigerated condition. The disclosed milk products can be fermented milk products which include but are not limited to yogurt, fermented milk, buttermilk, milk beverages, and desserts exhibiting acceptable quality such as texture and stability and taste.

According to the invention there is provided a milk based composition comprising 15% to 95%, preferably 25% to 95 %, milk and/or milk components, 0.5% to 5.5% (w), preferably 0.5% to 4 % (w), wheat flour, and 0.5 % to 4 % (w) rice flour; and wherein the composition is a fermented product comprising at least one lactic acid bacterial strain acid and wherein the composition optionally comprises sugar, salt, vitamins, minerals supplements, organoleptic modifiers, or a combination thereof.

In an embodiment, the weight ratio of wheat flour to rice flour is in the range of 1:3 to 3:1.

In another embodiment of the present invention, the composition has an amount of proteins of lower than 3% by weight, preferably of lower than 2.75% by weight, preferably in the range of 1% to 2.7%, preferably 1.7% to 2.7%.

In still another embodiment of the present invention, the composition comprises salt in the range of 0.1% to 0.5% by weight.

In a further embodiment of the present invention, the composition has a dry matter in the range of 20 % to 30%, preferably 22 to 27%.

Still a further embodiment provides the milk based composition as disclosed in the present invention comprising sugar in the range of 8% to 15% by weight.

Another embodiment provides the milk based composition as disclosed in the present invention comprising vitamins in the range of 0.1 % to 1% by weight.

Yet another embodiment provides the milk based composition as disclosed in the present invention comprising minerals supplements in the range of 0.1 % to 1% by weight.

Still a further embodiment provides the milk based composition as disclosed in the present invention comprising cocoa powder in the range of 0.5 %to 1.5% by weight.

Yet another embodiment of the present invention provides milk based fermented milk product comprising at-least one lactic acid bacterial strain, wherein the fermented product is a yogurt having pH in the range of 3.8 to 4.7.

Yet another embodiment of the present invention provides milk based fermented milk product, wherein the product is sweet, bland or salty.

In another embodiment there is provided the milk based composition of the present invention, wherein the composition a fermented milk based product in the form of an aqueous fluid, in which the solid particles are suspended in the milk composition and remain suspended for a period of 15-90 days after production, preferably 15-30 days after production for products different from fermented and thermized milk based products, or 30-90 for fermented and thermized milk based products.

In another embodiment there is provided the milk based composition of the present invention, wherein the composition is milk based fermented milk product comprising at-least one lactic acid bacterial strain, wherein the composition is an aqueous fluid, in which the solid particles are suspended in the milk composition and remain suspended for a period of 15-90 days after production, preferably 15-30 days after production for products different from fermented and thermized milk based products, or 30-90 for fermented and thermized milk based products.

In another embodiment there is provided the milk based composition of the present invention, wherein the composition is milk based fermented milk product comprising at-least one lactic acid bacterial strain, wherein the fermented product is a yogurt having pH in the range of 3.8 to 4.7, wherein the composition is an aqueous fluid, in which the solid particles are suspended in the milk composition and remain suspended for a period of 15-30 days after production.

Still another embodiment provides the milk based composition of the present invention, wherein the composition is substantially free of gelling agent, agglutinating agent, and/or modified starch.

Further embodiment provides the milk based composition of the present invention, wherein the gelling agent is pectin, gelatin and/or any other known gelling agent.

The present invention provides a process of making a milk based composition, wherein the process comprising (a) blending 15% to 95%, preferably 25% to 95 %, milk and/or milk components with 0.5 to 5.5% (w), preferably 0.5 to 4 % (w), wheat flour, and 0.5 to 3% (w) rice flour to obtain a mixture; and (b) heating the mixture at a temperature of about at least 90°C, preferably at least 95°C, more preferably at least 120 °C; and c) subjecting the mixture of step (b) to cooling at a temperature in the range of 25°C to 45°C, and inoculating at least one lactic acid bacterial strain after cooling and allowing fermentation at a temperature of about 35°C to 45°C preferably at 38°C.

In an embodiment, the present invention provides a process of making a milk based composition, wherein step (a) of the process according to the invention further comprises blending of sugar, vitamins, minerals supplements, organoleptic modifiers, or a combination thereof .

Another embodiment of the present invention provides a process of making a milk based composition, wherein the process according to the invention further comprises a step of subjecting the mixture of step (a) to homogenization at a pressure ranging from 100-250 bar at a temperature ranging from 55-75°C, preferably 55-70°C prior to step (b).

In an embodiment of the present invention step (b) optionally comprises
b1) pre-heating the mixture of step (a) to a temperature in the range of 65°C to 70°C,
b2) homogenizing the mixture of step (b1) at a pressure ranging from 100 to 250 bar at a temperature ranging from 55-75°C, preferably 55-70°C,
b3) sterilizing the mixture of step (b2) at a temperature of about 128°C to 145°C, and
b4) cooling the mixture of step (b3) at a temperature of about 25°C to 45°C

In an embodiment the process is performed in a tank.

In an embodiment the process comprises packaging in a container.

While the invention finds particular suitability for a connection with yogurt, beverages, and deserts, the person skilled in the art can appreciate that the invention can also be used in connection with other milk based food products and non-milk based products such as fermented soy milk product including soy yogurt, soy beverages, and soy desserts; non-milk based products do not form part of the invention.

Each of these milk based food compositions components as well as processes of preparation, use and attributes are described in detail below. The details or advantage to the invention will appear in view of the non limiting examples below.

### EXAMPLES

### Example 1

### A Process for Preparing a Milk-Based Stable Fermented Product containing wheat and rice flour: Yogurt

Yogurt disclosed in the present invention having the composition as set forth in Table 1 was prepared as follows.

Milk, water, 13% sugar, 1% wheat flour, and 2.5 % rice flour were blended and the mixture was heated at a temperature between 65°C to 70°C. The heated mixture was homogenized at a pressure of 100-250 bar in a single stage at 55-70°. The homogenized mixture was further heated at temperature of about 95°C to 128°C for 1 to 6 minutes. Subsequently, the mixture was cooled at a temperature of about 38°C to 43°C and lactic acid bacterial culture was added to the cooled mixture to allow fermentation to attempt a pH of about 4.3 to 4.7. The product thus obtained can optionally be fortified with 0.1-1% of 30% RDA Fe/ J/ Zn/ Vita A and packaged and stored at refrigerator temperature.

### Example 2

### Comparative test

Comparative tests conducted with indivisible flour i.e. rice flour (1% or 4%) and wheat flour (1% or 4%) by operating in the same conditions as described above. It was found that the resultant product was not of the desired characteristics. The resultant products perceived as having a too thick or watery and sticky mouthfeel, and hence unacceptable on the organoleptic level. For example, in case of the yogurt containing only rice flour (1% or 3%) as a stabilizer was watery and was long slimy in appearance, whereas the yogurt containing only wheat flour (1% or 4%), as a stabilizer, was watery, jellified and was slimy lumpy in appearance. Comparative results are recorded in Table 1 and 2.

### Example 3

### Sensory analysis test

Milk products disclosed in the present invention are stable when stored for 15-30 days under refrigerated condition, do not exhibit any detectable adverse taste as judged by a standard sensory analysis test.

The characteristics of the yogurt composition comprising wheat and rice flour alone or in combination are provided in Table 2.

The analysis was also confirmed by a panel consisting of 5-6 members. Consumers making up the panel were selected for their sensory capacities. Standard yoghurt was used as a control. Panel members use a taste evaluation grid whereby qualitative observations are individually noted on the following items visual aspect of the yoghurt, texture in spoon serving, texture related mouthfeel, flavours and aroma.

The sensory analysis test conducted showed that the product exhibits acceptable test, viscosity, texture, appearance, and organoleptic characteristics.

### Example 4

### A Process for Preparing Milk-Based Stable non-Fermented Product containing wheat and rice flour: Milk beverage

Example 4 does not form part of the invention. A milk beverage is described herein; the beverage has the composition as set forth in Table 3 and was prepared as follows.

Milk, water, 12% sugar, 3.5% wheat flour, 1.7% rice flour, and 1.2% cacao powder were blended and the mixture was subjected to a temperature between 65-70°C. The heated mixture was homogenized at a pressure of about 100-250 bar in a single stage at 55-70°. The homogenized mixture was further heated at temperature of about 95°C to 128°C for 1 to 6 minutes and subsequently cooled at 30°C. The product thus obtained can optionally be fortified with 0.1-1% of 30% RDA Fe/ J/ Zn/ Vita A and packaged and stored at refrigerator temperature.

**Table 1: Composition of yogurt**

| **Ingredients** | **Yogurt comprising wheat and Rice Flour** | **Yogurt comprising Rice Flour (Comparative)** | | **Yogurt comprising wheat Flour (Comparative)** | |
|---|---|---|---|---|---|
| Milk | 83% full milk | 83% full milk | 83% full milk | 83% full milk | 83% full milk |
| Water | NIL | NIL | NIL | NIL | NIL |
| Sugar | 13% | 13% | 13% | 13% | 13% |
| Wheat flour | 1% | NIL | NIL | 1% | 4% |
| Rice flour | 2.5% | 1% | 3% | NIL | NIL |
| Vitamins and Minerals | 0.1-1% | 0.1-1% | 0.1-1% | 0.1-1% | 0.1-1% |
| Flavor | 0.1 % | 0.1 % | 0.1 % | 0.1% | 0.1 % |
| Culture | 0,0015 % | 0,0015 % | 0,0015 % | 0,0015 % | 0,0015 % |
| Protein | 2.6 | 2.6 | 2.6 | 2.6 | 2.6 |
| Fat | 3.0 | 3.0 | 3.0 | 3.0 | 3.0 |
| Dry matter | 26.0 | 26.0 | 26.0 | 26.0 | 26.0 |
| pH | 4.6 | 4.6 | 4.6 | 4.6 | 4.6 |

**Table 2: Characteristics of the yogurt**

| **Characteristics** | **Yogurt comprising wheat and Rice Flour** | **Yogurt comprising 1% Rice Flour** | **Yogurt comprising 3% Rice Flour** | **Yogurt comprising 1% wheat Flour** | **Yogurt comprising 4% wheat Flour** |
|---|---|---|---|---|---|
| Viscosity | 900-1400 mPas | 400 mPas | 400-600 mPas | 600 mPas | 900-1400 mPas |
| Mouth feel | Smooth | Smooth | Smooth | Sticky | Sticky |
| Creaminess | Full mouth | Watery | Slightly creamy | Watery | Jellified |
| Appearance | Similar to yoghurt | Long slimy | Long slimy | Slimy | Lumpy |
| Texture | Smooth/crea my | Smooth, very thin | Smooth, thin | Slimy, thin | Thick, lumpy |
| Taste | Acceptable | Acceptable | Acceptable | Unacceptable | Unacceptable |

**Table 3: Composition of milk beverage**

| **Ingredients** | **Milk beverage** |
|---|---|
| Milk | 51% full milk |
| Water | 30% Waters |
| Sugar | 12% |
| Wheat flour | 3.5% |
| Rice flour | 1.7% |
| Vitamins and minerals | 0.1-1% |
| Cacao powder | 1.2% |
| Protein | 2.3% |
| Fat | 2.0% |
| Dry matter | 23.74% |
| pH | 6.65 |

## Claims

1. A milk based composition comprising
• 15% to 95%, preferably 25% to 95 %, milk and/or milk components,
• 0.5% to 5.5%, preferably 0.5% to 4 % (w), wheat flour, and
• 0.5 % to 4 % (w) rice flour,
wherein the composition is a fermented product comprising at least one lactic acid bacterial strain and wherein the composition optionally comprises sugar, salt, vitamins, minerals supplements, organoleptic modifiers, or a combination thereof.

2. The milk based composition as claimed in claim 1, wherein weight ratio of wheat flour to rice flour is in the range of 1:3 to 3:1

3. The milk based composition as claimed in claim 1 or 2, wherein the composition has an amount of proteins of lower than 3% by weight, preferably of lower than 2.75% by weight, preferably in the range of 1% to 2.7%.

4. The milk based composition as claimed in any of the preceding claims, wherein the composition has a dry matter in the range of 20 % to 30%, preferably 22 to 27%.

5. The milk based composition as claimed in any of the preceding claims, wherein the composition comprises sugar in the range of 8% to 15% by weight.

6. The milk based composition as claimed in any of the preceding claims, wherein the composition comprises a salt.

7. The milk based composition as claimed in claim 6, wherein the salt is in the range of 0.1 to 0.5% by weight.

8. The milk based composition as claimed in any one of claims 1 to 7, wherein the fermented product is a yogurt having pH in the range of 3.8 to 4.7.

9. The milk based composition as claimed in any of claims 1 to 9, wherein the composition is in the form of an aqueous fluid, in which the solid particles are suspended in the composition and remain suspended for a period of 15-90 days after production, preferably 15-30 days after production for products different from fermented and thermized products, or 30-90 days for fermented and thermized products.

10. The milk based composition as claimed in any of the preceding claims, wherein the composition is free of gelling agent, agglutinating agent and/or modified starch.

11. A process of making a milk based composition according to any of the preceding claims, said process comprising
a) blending 15% to 95%, preferably 25% to 95 %, milk and/or milk components with 0.5 to 5.5% (w), preferably 0.5 to 4 % (w), wheat flour, and 0.5 to 3% (w) rice flour to obtain a mixture; and
b) heating the mixture at a temperature of about at least 90°C, preferably at least 95°C, more preferably at least 120 °C; and
c) subjecting the mixture of step (b) to cooling at a temperature in the range of 25°C to 45°C, and inoculating at least one lactic acid bacterial strain after cooling and allowing fermentation at a temperature of about 35°C to 45°C preferably at 38°C.

12. The process as claimed in claim 11, wherein the process comprises a step of subjecting the mixture of step (a) to homogenization at a pressure ranging from 100-250 bar at a temperature ranging from 55-70°C prior to step (b).

13. The process as claimed in claim 11 or 12, wherein the process comprises
(a) blending 15% to 95%, preferably 25% to 95 %, milk and/or milk components with 0.5 to 5.5% (w), preferably 0.5 to 4 % (w), wheat flour, and 0.5 to 3% (w) rice flour to obtain a mixture; and (b) heating the mixture at a temperature of about at least 90°C, preferably at least 95°C, more preferably at least 120°C, wherein step (b) optionally comprises
b1) pre-heating the mixture of step (a) to a temperature in the range of 65°C to 70°C,
b2) homogenizing the mixture of step (b1) at a pressure ranging from 100 to 250 bar at a temperature ranging from 55-75°C, preferably 55-70°C,
b3) sterilizing the mixture of step (b2) at a temperature of about 128°C to 145°C, and
b4) cooling the mixture of step (b3) at a temperature of about 25°C to 45°C, and
c) inoculating at least one lactic acid bacterial strain after cooling and allowing fermentation at a temperature of about 35°C to 45°C preferably at 38°C

## Patentansprüche

1. Milch-basierte Zusammensetzung, aufweisend
• 15% bis 95%, bevorzugt 25% bis 95%, Milch und/oder Milchkomponenten,
• 0,5% bis 5,5%, bevorzugt 0,5% bis 4% (w), Weizenmehl, und
• 0,5% bis 4% (w) Reismehl,
wobei die Zusammensetzung ein fermentiertes Produkt ist, das wenigstens einen Milchsäurebakterienstamm aufweist, und wobei die Zusammensetzung optional Zucker, Salz, Vitamine, Mineralzusätze, organoleptische Modifikatoren, oder eine Kombination hiervon aufweist.

2. Milch-basierte Zusammensetzung gemäß Anspruch 1, wobei das Gewichtsverhältnis von Weizenmehl zu Reismehl im Bereich von 1:3 bis 3:1 liegt.

3. Milch-basierte Zusammensetzung gemäß Anspruch 1 oder 2, wobei die Zusammensetzung eine Menge an Proteinen von kleiner als 3 Gewichts-%, bevorzugt von kleiner als 2,75 Gewichts-%, bevorzugt im Bereich von 1% bis 2,7% hat.

4. Milch-basierte Zusammensetzung gemäß irgendeinem der vorhergehenden Ansprüche, wobei die Zusammensetzung einen Trockengehalt im Bereich von 20% bis 30%, bevorzugt von 22 bis 27% hat.

5. Milch-basierte Zusammensetzung gemäß irgendeinem der vorhergehenden Ansprüche, wobei die Zusammensetzung Zucker im Bereich von 8 bis 15 Gewichts-% aufweist.

6. Milch-basierte Zusammensetzung gemäß irgendeinem der vorhergehenden Ansprüche, wobei die Zusammensetzung Salz aufweist.

7. Milch-basierte Zusammensetzung gemäß Anspruch 6, wobei das Salz im Bereich von 0,1 bis 0,5 Gewichts-% ist.

8. Milch-basierte Zusammensetzung gemäß irgendeinem der Ansprüche 1 bis 7, wobei das fermentierte Produkt Jogurt ist, der einen pH im Bereich von 3,8 bis 4,7 hat.

9. Milch-basierte Zusammensetzung gemäß irgendeinem der Ansprüche 1 bis 9, wobei die Zusammensetzung in der Form eines wässrigen Fluid ist, in welchem die Feststoffpartikel in der Zusammensetzung in Suspension sind und nach der Herstellung in Suspension verbleiben für einen Zeitraum von 15-90 Tagen, bevorzugt von 15-30 Tagen nach der Herstellung für Produkte, die unterschiedlich sind von fermentierten und wärmebehandelten Produkten, oder von 30-90 Tagen für fermentierte und wärmebehandelte Produkte.

10. Milch-basierte Zusammensetzung gemäß irgendeinem der vorhergehenden Ansprüche, wobei die Zusammensetzung Geliermittel-frei, Agglutiniermittel-frei und/oder Modifizierte-Stärke-frei ist.

11. Verfahren zum Herstellen einer Milch-basierten Zusammensetzung gemäß irgendeinem der vorhergehenden Ansprüche, wobei das Verfahren aufweist:
a) Mischen von 15% bis 95%, bevorzugt 25% bis 95%, Milch und/oder Milchkomponenten mit 0,5 bis 5,5% (w), bevorzugt 0,5 bis 4% (w), Weizenmehl und 0,5 bis 3% (w) Reismehl, um eine Mischung zu erlangen, und
b) Erwärmen der Mischung auf eine Temperatur von wenigstens 90°C, bevorzugt auf wenigstens 95°C, bevorzugter auf wenigstens 120°C, und
c) Unterziehen der Mischung von Schritt b) einem Kühlen auf eine Temperatur im Bereich von 25°C bis 45°C, und Einimpfen wenigstens eines Milchsäurebakterienstamms nach dem Kühlen und Erlauben von Fermentation bei einer Temperatur von etwa 35°C bis 45°C, bevorzugt bei 38°C.

12. Verfahren gemäß Anspruch 11, wobei das Verfahren aufweist einen Schritt des Unterziehens der Mischung von Schritt (a) einem Homogenisieren bei einem Druck im Bereich von 100-250 bar bei einer Temperatur im Bereich von 55-70°C vor dem Schritt (b).

13. Verfahren gemäß Anspruch 11 oder 12, wobei das Verfahren aufweist
(a) Mischen von 15% bis 95%, bevorzugt 25% bis 95%, Milch und/oder Milchkomponenten mit 0,5 bis 5,5% (w), bevorzugt 0,5 bis 4% (w), Weizenmehl und 0,5 bis 3% (w) Reismehl, um eine Mischung zu erlangen, und (b) Erwärmen der Mischung auf eine Temperatur von etwa wenigstens 90°C, bevorzugt wenigstens 95°C, und bevorzugter wenigstens 120°C, wobei Schritt (b) optional aufweist
b1) Vorerwärmen der Mischung von Schritt (a) auf eine Temperatur im Bereich von 65°C bis 70°C,
b2) Homogenisieren der Mischung von Schritt (b1) bei einem Druck im Bereich von 100 bis 250 bar bei einer Temperatur im Bereich von 55-75°C, bevorzugt 55-70°C,
b3) Sterilisieren der Mischung von Schritt (b2) bei einer Temperatur von etwa 128°C bis 145°C, und
b4) Kühlen der Mischung von Schritt (b3) auf einer Temperatur von etwa 25°C bis 45°C, und
c) Einimpfen wenigstens eines Milchsäurebakterienstamms nach dem Kühlen und Erlauben von Fermentation bei einer Temperatur von etwa 35°C bis 45°C, bevorzugt bei 38°C.

## Revendications

1. Composition à base de lait comprenant
• 15 % à 95 %, de préférence 25 % à 95 % de lait et/ou de composants du lait,
• 0,5 % à 5,5 %, de préférence 0,5 % à 4 % (en poids) de farine de blé, et
• 0,5 % à 4 % (en poids) de farine de riz,
laquelle composition est un produit fermenté comprenant au moins une souche de ferment lactique, et laquelle composition comprend éventuellement du sucre, du sel, des vitamines, des compléments minéraux, des modificateurs organoleptiques, ou une combinaison de ceux-ci.

2. Composition à base de lait selon la revendication 1, dans laquelle le rapport en poids de la farine de blé à la farine de riz est situé dans la plage allant de 1/3 à 3/1.

3. Composition à base de lait selon la revendication 1 ou 2, laquelle composition a une quantité de protéines inférieure à 3 % en poids, de préférence inférieure à 2,75 % en poids, de préférence située dans la plage allant de 1 % à 2,7 %.

4. Composition à base de lait selon l'une quelconque des revendications précédentes, laquelle composition a un extrait sec situé dans la plage allant de 20 % à 30 %, de préférence de 22 à 27 %.

5. Composition à base de lait selon l'une quelconque des revendications précédentes, laquelle composition comprend du sucre à raison de 8 % à 15 % en poids.

6. Composition à base de lait selon l'une quelconque des revendications précédentes, laquelle composition comprend un sel.

7. Composition à base de lait selon la revendication 6, dans laquelle le sel est présent à raison de 0,1 à 0,5 % en poids.

8. Composition à base de lait selon l'une quelconque des revendications 1 à 7, dans laquelle le produit fermenté est un yaourt ayant un pH situé dans la plage allant de 3,8 à 4,7.

9. Composition à base de lait selon l'une quelconque des revendications 1 à 9, laquelle composition est sous la forme d'un fluide aqueux dans lequel les particules solides sont en suspension dans la composition et restent en suspension pendant une période de 15 à 90 jours après la production, de préférence 15 à 30 jours après la production pour des produits différents des produits fermentés et thermisés, ou de 30 à 90 jours pour les produits fermentés et thermisés.

10. Composition à base de lait selon l'une quelconque des revendications précédentes, laquelle composition est exempte d'agent gélifiant, d'agent agglutinant et/ou d'amidon modifié.

11. Procédé de préparation d'une composition à base de lait selon l'une quelconque des revendications précédentes, ledit procédé comprenant les opérations consistant à
a) mélanger 15 % à 95 %, de préférence 25 à 95 % de lait et/ou de composants du lait avec 0,5 % à 5,5 % (en poids), de préférence 0,5 à 4 % (en poids) de farine de blé, et 0,5 à 3 % (en poids) de farine de riz pour obtenir un mélange ; et
b) chauffer le mélange à une température d'environ au moins 90°C, de préférence au moins 95°C, mieux encore au moins 120°C ; et
c) soumettre le mélange de l'étape (b) à un refroidissement à une température située dans la plage allant de 25°C à 45°C, et inoculer au moins une souche de ferment lactique après refroidissement et laisser la fermentation avoir lieu à une température d'environ 35°C à 45°C, de préférence de 38°C.

12. Procédé selon la revendication 11, lequel procédé comprend une étape consistant à soumettre le mélange de l'étape (a) à une homogénéisation sous une pression située dans la plage allant de 100 à 250 bar et à une température située dans la plage allant de 55 à 70°C avant l'étape (b).

13. Procédé selon la revendication 11 ou 12, lequel procédé comprend les opérations consistant à
(a) mélanger 15 % à 95 %, de préférence 25 à 95 % de lait et/ou de composants du lait avec 0,5 % à 5,5 % (en poids), de préférence 0,5 à 4 % (en poids) de farine de blé, et 0,5 à 3 % (en poids) de farine de riz pour obtenir un mélange ; et
b) chauffer le mélange à une température d'environ au moins 90°C, de préférence au moins 95°C, mieux encore au moins 120°C, laquelle étape (b) comprend éventuellement les opérations consistant à
b1) préchauffer le mélange de l'étape (a) à une température située dans la plage allant de 65°C à 70°C,
b2) homogénéiser le mélange de l'étape (b1) sous une pression située dans la plage allant de 100 à 250 bar et à une température située dans la plage allant de 55 à 75°C, de préférence de 55 à 70°C,
b3) stériliser le mélange de l'étape (b2) à une température d'environ 128°C à 145°C, et
b4) ramener le mélange de l'étape (b3) à une température d'environ 25°C à 45°C, et
c) inoculer au moins une souche de ferment lactique après refroidissement et laisser la fermentation avoir lieu à une température d'environ 35°C à 45°C, de préférence de 38°C.
